# EUROPEAN PATENT APPLICATION

(11) **EP 3 051 453 A1**
(43) Date of publication of application: **03.08.2016**
(21) Application number: 15020010.3
(22) Date of filing: 27.01.2015
(51) Int. Cl.: G06F 21/36, G06Q 30/00

(54) **Electronic puzzle messaging**

(71) Applicant: Mackrill, Alun, Camberley, Surrey GU15 2PS (GB); Findlay, Lewis, Camberley, Surrey GU15 2PS (GB)
(72) Inventor: Mackrill, Alun, Camberley, Surrey GU15 2PS (GB); Findlay, Lewis, Camberley, Surrey GU15 2PS (GB)

(57) **Abstract**

The association of a puzzle with an electronic message to control access to the underlying content.

The sender of a message chooses from a range of puzzle (or game) types and further refines the choice by allocating a level of difficulty and / or completion time. The message is then sent to recipients who must successfully complete the puzzle to reveal the content (message body).

## Description

The "Electronic Puzzle Message" (EPM) concept applies a new paradigm for social media interactions by applying a puzzle (or game or challenge) to a message which must be completed before the recipient is able to access or reveal the content of the message.

The EPM model behaves at a basic level in a simplistic manner. The initiator (or sender) of the message selects a suitable puzzle to be associated with the content to be despatched. This combined EPM is then submitted to one or more contacts designated by the initiator. The recipient must complete the puzzle to access the content despatched by the sender.

A variety of puzzle types are presented along with the ability to define complexity in terms of difficulty level, time to solve or first N contacts to complete only. In the latter case, a sender may nominate multiple contacts (e.g. 5) but stipulate that only the first 4 to complete the puzzle will have access to the content.

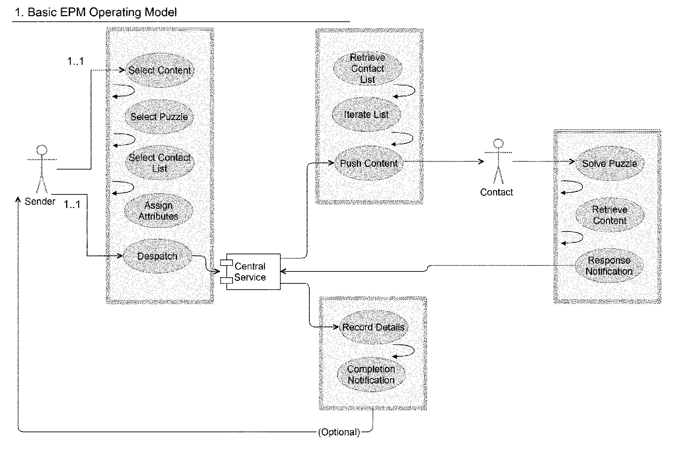

Diagram 1 illustrates the concept of the basic operating model.

The EPM model has a number of distinct variants or usage implementations.
1. Person to person(s) messaging with a simple completion of the puzzle to unlock message content
2. Person to person(s) messaging with a sub set of the total target group having access to the message content
3. Cases 1 & 2 above relating to organisations participating in EPM
4. Collaborative messaging to a group of contacts each of whom must complete the puzzle to unlock the content. In this case content is shown to recipients only when all have completed the puzzle
5. Collaborative messaging to a group of contacts to be ranked according to completion time, all of whom have access to the content
6. Collaborative messaging to separate groups to complete puzzles in competition with each other, with only 'winners' have access to the content
7. Cases 4, 5 and 6 above relating to organisations participating in EPM
8. Allocation of EPM points to initiators and recipients for both the despatching and completion of a puzzle message.
9. The option to purchase EPM points without the need to earn these via 7 above
10. Exchange of points in lieu of the completion of a puzzle before accessing message content

### Terminology

***'Unlock'*** in the context below simply referring to the ability of the user to access the message/content sent, or made available, to them

***'Puzzle'*** is a term used to refer to any intellectual challenge to be completed. This includes, but is not limited to, the use of established mechanisms such as Sudoku, cross word, progressive sequences, tile arrangement, jigsaw, word search etc. Puzzle also includes the use of the term 'game' as denoted below.

***'Game'*** refers to any electronic program designed as a pleasurable activity or where the user derives satisfaction from participating in completing an activity

***'Contact'*** refers to a person (or organisation) known to the individual. This is usually in the context of social or friendship but may also include business and corporate relationships.

***'Content'*** refers to the body of an electronic message whether this contains only text, image, video, audio or other complex data format individually or in combination

**'Message'** refers to any electronic mechanism delivering content (as denoted above) between contacts.

***'Reveal'*** may refer to the actual opening of content, the expansion of content, or the refocus of otherwise un-viewable content

## Claims

1. The playing of a game prior to, and in order to unlocking / revealing content despatched via electronic means.

2. The completion (or partial completion) of a puzzle as a precursor to revealing the content of a message despatched via electronic means

3. The use of games or puzzles to unlock electronic messages and content received from any physical device used for this purpose

4. The use of games or puzzles to unlock electronic messages and content received from a mobile phone device

5. The use of games or puzzles to unlock electronic messages and content received from a tablet device

6. The use of games or puzzles to unlock electronic messages and content received from a personal computer or laptop device

7. The use of a preliminary game to unlock text content from electronic transfer (including email, messaging and push / pull technologies)

8. The use of a preliminary game to unlock image content from electronic transfer (including email, messaging and push / pull technologies)

9. The use of a preliminary game to unlock audio content from electronic transfer (including email, messaging and push / pull technologies)

10. The use of a preliminary game to unlock video content from electronic transfer (including email, messaging and push / pull technologies)

11. The use of a preliminary game to unlock complex content (including office documents and spreadsheets) from electronic transfer (including email, messaging and push / pull technologies)

12. The use of a puzzle to unlock text content from electronic transfer (including email, messaging and push / pull technologies)

13. The use of a puzzle to unlock image content from electronic transfer (including email, messaging and push / pull technologies)

14. The use of a puzzle to unlock audio content from electronic transfer (including email, messaging and push / pull technologies)

15. The use of a puzzle to unlock video content from electronic transfer (including email, messaging and push / pull technologies)

16. The use of a puzzle to unlock complex content (including office documents and spreadsheets) from electronic transfer (including email, messaging and push / pull technologies)

17. The distribution of content for collaborative completion. For example, the distribution of an image broken down into separate puzzles and games which must be unlocked (either total or to a specified completion threshold) to reveal the overall image.

18. The distribution of content linked to puzzles and games within a group or collaborative context in order to perform team or individual based competition.

19. Ranking and awarding of points for individuals distributing content to be unlocked

20. Ranking and awarding of points for individuals completing puzzles

21. The exchange of points earned as above to unlock current message content.

22. The exchange of points awarded for other activities such as receiving advertising, loyalty bonus etc. to unlock current message content.

23. Due to the actions/performance of other recipients of the same content, there exists the ability of limiting/withdrawing the ability of an individual or individuals to 'unlock' (reveal) the content, despite them having the content delivered, and despite being 'successful' at the puzzle or game. So users may be able to achieve the criteria to 'unlock' the delivered 'locked' content, but due to the superior performance of other users, and specifically their superior success at the game or puzzle, (however that success might be measured (time/duration/moves/etc)), they will not 'unlock' the content.

24. The division of content (documents/photos/videos/images) that can only be reformatted through the solution of a puzzle or password or any other security device, but where that content is physically divided and stored in different locations so that the loss of integrity of any one storage site is mitigated by that fact that only a small proportion of the content is there. If a photo were split into sixteen squares, and each square was stored in a separate location, and can only be brought back together by the user interface, rather than by a hack into the storage provider themselves.
